# EUROPEAN PATENT APPLICATION

(11) **EP 4 826 948 A1**
(43) Date of publication of application: **21.10.2026**
(21) Application number: 25867300.3
(22) Date of filing: 25.06.2025
(51) Int. Cl.: H02J 3/46

(54) **ENERGY CONFIGURATION METHOD AND APPARATUS, INVERTER, AND STORAGE MEDIUM**

(30) Priority: 28.02.2025 CN 202510238519
(71) Applicant: Suzhou Qiancheng New Energy Technology Co., Ltd., Suzhou, Jiangsu 215101 (CN)
(72) Inventor: DING, Jiajie, Suzhou, Jiangsu 215101 (CN); TIAN, Kang, Suzhou, Jiangsu 215101 (CN); MA, Jie, Suzhou, Jiangsu 215101 (CN); XIAO, Liujie, Suzhou, Jiangsu 215101 (CN)
(74) Representative: Bayramoglu et al.
(86) International application number: PCT/CN2025/103480
(87) International publication number: WO 2026/179015

(57) **Abstract**

This application is applicable to the field of inverter technologies, and provides an energy configuration method and apparatus, an inverter, and a storage medium. The method includes: determining a target connected device of a target inverter based on a selection operation for a connected device selection label, and determining a target operation mode of the target connected device based on a selection operation for an operation mode configuration label associated with the connected device selection label, where the target connected device includes at least one of an input source device, a load device, and an extended accessory device; generating an energy configuration list based on the connected device selection label and the operation mode configuration label; and configuring, based on the configuration list, an operation mode of the target connected device to be the target operation mode. This solution resolves problems of quick setting and effective recommendation for energy configuration during operation and maintenance and use of a complex energy system.

## Description

### TECHNICAL FIELD

This application pertains to the field of inverter technologies, and in particular, to an energy configuration method and apparatus, an inverter, and a storage medium.

### BACKGROUND TECHNOLOGY

Currently, an energy configuration method for an energy system that includes a photovoltaic inverter, a photovoltaic hybrid energy storage inverter, and the like includes: using standardized settings that are written at one single time when leaving the factory; using settings that are performed by personnel one by one; and providing a startup wizard but failing to set requirements at one single time. However, the existing energy configuration method for the energy system has the following disadvantages:
(1) Configuration recommendation is not supported.
(2) A label or selection is not supported.
(3) Settings of operation and maintenance personnel during mounting and configurations of users during use consume a long time.
(4) A configuration procedure is cumbersome and a user-friendliness degree of the configuration procedure is relatively low.

When a function of the energy system is complex, an amount of externally exchanged data is large, and a long time is consumed, complexity of the system is high. The existing energy configuration method cannot meet a scenario in which operation and maintenance are performed during on-site mounting, a user quickly sets the energy system, and configuration is effectively recommended. Therefore, there is an urgent need in this field to provide quick setting and effective recommendation solutions for an energy configuration operation during operation and maintenance and use of a complex energy system.

### TECHNICAL PROBLEMS

An objective of embodiments of this application is to provide an energy configuration method, so as to resolve problems of quick setting and effective recommendation for energy configuration during operation and maintenance and use of a complex energy system.

### TECHNICAL SOLUTIONS

Embodiments of this application are implemented as follows: An energy configuration method includes:
determining a target connected device of a target inverter based on a selection operation for a connected device selection label, and determining a target operation mode of the target connected device based on a selection operation for an operation mode configuration label associated with the connected device selection label, where the target connected device includes at least one of an input source device, a load device, and an extended accessory device;
generating an energy configuration list based on the connected device selection label and the operation mode configuration label; and
configuring, based on the configuration list, an operation mode of the target connected device to be the target operation mode.

Still further, the energy configuration method further includes:
providing corresponding association information based on the energy configuration list, where the association information includes at least one of prompt information, configuration description, a precaution, and a related recommendation of a target operation mode of each target connected device in the energy configuration list.

Still further, the energy configuration method further includes:
detecting a connected device and a function of the connected device that are supported by the target inverter; and
generating, based on the connected device and the function of the connected device that are supported by the target inverter, the connected device selection label and the operation mode configuration label associated with the connected device selection label.

Still further, the generating, based on the connected device and the function of the connected device that are supported by the target inverter, the connected device selection label and the operation mode configuration label associated with the connected device selection label includes:
generating the connected device selection label based on the connected device supported by the target inverter;
determining a candidate operation mode of each connected device based on a function of the connected device; and
removing a candidate operation mode that is mutually exclusive with configuration information of the target inverter, determining an operation mode configuration label of each connected device based on a candidate operation mode that is obtained after the removal, and associating the operation mode configuration label with a corresponding selection label of the connected device.

Still further, the energy configuration method further includes:
detecting whether configuration information of the target inverter changes; and
when the configuration information of the target inverter changes, performing a step of detecting a connected device and a function of the connected device that are supported by the target inverter.

Still further, the energy configuration method further includes:
detecting whether the connected device and the function of the connected device that are supported by the target inverter are increased; and
if an increased connected device and a function of the connected device have an existing connected device selection label and an operation mode configuration label associated with the existing connected device selection label, generating a prompt indicating whether to continue to use the existing connected device selection label and the operation mode configuration label associated with the existing connected device selection label.

Still further, the input source device includes at least one of a mains supply, a photovoltaic power supply, a battery, and a generator; the load device includes at least one of a charging pile, a heat pump, and a smart load; and the extended accessory device includes a smart junction box configured to extend a hardware function of the target inverter.

An embodiment of this application further provides an energy configuration apparatus, including:
a label selection module, configured to determine a target operation mode of a target connected device based on a selection operation for an operation mode configuration label associated with the connected device selection label;
a list generation module, configured to generate an energy configuration list based on the connected device selection label and the operation mode configuration label; and
a mode configuration module, configured to configure, based on the configuration list, an operation mode of the target connected device to be the target operation mode.

An embodiment of this application further provides an inverter, including:
at least one processor; and
a memory communicatively connected to the at least one processor, where
the memory stores instructions that are executable by the at least one processor, and the instructions are executed by the at least one processor, to enable the at least one processor to perform the energy configuration method.

An embodiment of this application further provides a computer-readable storage medium, storing a computer program, where the computer program is executed by a processor to implement the energy configuration method.

Because the connected device and its operation mode are labeled in advance, the target operation mode of a target connected device can be determined by selecting a connected device selection label and its associated operation mode configuration label. This enables the configuration of complex energy devices with multiple input sources, avoids cumbersome procedural settings, effectively improves configuration efficiency, better meets user-friendly requirement, realizes effective configuration recommendation, enhances user experience, and ensures that the device configuration process and result are safer, simpler, and more efficient.

### DESCRIPTION OF THE DRAWINGS

To describe the technical solutions in embodiments of this application more clearly, the following briefly describes the accompanying drawings that need to be used in the embodiments or exemplary technical descriptions. Clearly, the accompanying drawings in the following descriptions show merely some embodiments of this application, and a person of ordinary skill in the art may still derive other drawings from these accompanying drawings without creative efforts.
FIG. 1 is a flowchart of an energy configuration method according to an embodiment of this application;
FIG. 2 is a flowchart of another energy configuration method according to an embodiment of this application;
FIG. 3 is a schematic diagram of comparison between unlabeled and labeled configuration manners according to an embodiment of this application;
FIG. 4 shows an example of labeling according to an embodiment of this application;
FIG. 5 is a schematic diagram of an energy configuration apparatus according to an embodiment of this application;
FIG. 6 is a schematic diagram of another energy configuration apparatus according to an embodiment of this application;
FIG. 7 is a schematic diagram of embedding of software and hardware platforms according to an embodiment of this application;
FIG. 8 shows an example of a labeled configuration interface according to an embodiment of this application; and
FIG. 9 is a schematic flowchart of performing an energy configuration method according to an embodiment of this application.

### IMPLEMENTATIONS OF THE PRESENT INVENTION

To make the objectives, technical solutions, and advantages of this application clearer, the following further describes this application in detail with reference to the accompanying drawings and embodiments. It should be understood that specific embodiments described herein are merely used to explain this application, but are not intended to limit this application.

It should be noted that when a component is referred to as being "fastened to" or "disposed on" another component, the component may be directly or indirectly on the another component. When a component is referred to as being "connected to" another component, the component may be directly or indirectly connected to the another component. An orientation or a positional relationship indicated by terms such as "up", "down", "left", and "right" is an orientation or a positional relationship shown based on the accompanying drawings, and is merely intended for ease of description, rather than indicating or implying that the apparatus or element indicated must have a specific orientation or be constructed and operated in a specific orientation, and therefore should not be understood as a limitation on this application. A person of ordinary skill in the art can understand specific meanings of the foregoing terms based on an actual situation. Terms "first" and "second" are merely intended for ease of description, and should not be understood as indicating or implying relative importance or implicitly indicating a quantity of technical features. "A plurality of" means two or more, unless otherwise specifically defined.

To describe the technical solutions provided in this application, the following provides detailed description with reference to specific accompanying drawings and embodiments.

In this application, the connected device and its operation mode are labeled in advance. Therefore, the target operation mode of a target connected device can be determined by selecting a connected device selection label and its associated operation mode configuration label. This enables the configuration of complex energy devices with multiple input sources, avoids cumbersome procedural settings, effectively improves configuration efficiency, better meets user-friendly requirement, enhances user experience, and ensures that the device configuration process and result are safer, simpler, and more efficient.

### Embodiment 1

This embodiment provides an energy configuration method, which may be applied to an electronic device that has communication, calculation, and data storage capabilities. In actual application, the method in this embodiment may be applied to an electronic device such as an energy device, and is specifically applied to a real-time operating system for an embedded computer in the energy device, and is implemented by a computer program. The energy device is, for example, an inverter. The inverter includes an inverter device providing energy, such as a photovoltaic inverter and a photovoltaic hybrid energy storage inverter.

In a scenario of a complex energy system with multiple input sources and a plurality of connected devices, the method in this embodiment provides a solution for a user to quickly perform energy configuration in a labeled energy configuration manner.

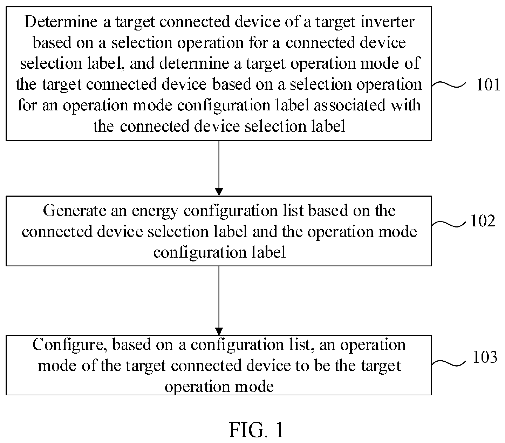

As shown in FIG. 1, a specific procedure of the method in this embodiment may include:
Step 101: Determine a target connected device of a target inverter based on a selection operation for a connected device selection label, and determine a target operation mode of the target connected device based on a selection operation for an operation mode configuration label associated with the connected device selection label.

In actual application, there are a plurality of types of devices possibly connected to an inverter in a complex energy system, including at least one of an input source device, a load device, and an extended accessory device. The input source device includes at least one of a mains supply, a photovoltaic power supply, a battery, and a generator, or includes other clean energy. The load device includes at least one of a charging pile, a heat pump, and a smart load. The extended accessory device includes a smart junction box configured to extend a hardware function of the target inverter, for example, a BI (backup interface, backup interface) smart junction box. During use, the smart junction box may be connected to the input source device, the load device, another inverter, another extended accessory device, and the like, to extend the hardware function of the inverter. The operation mode configuration label associated with the connected device selection label may be generated in advance according to a customer requirement to meet a personalized requirement of the user, so as to effectively recommend an operation mode configuration for each connected device to the user during energy configuration.

Therefore, the target connected device selected by the user for the connected device selection label may include at least one of the input source device, the load device, and the extended accessory device.

On the basis of selecting the target connected device for the connected device selection label, a target operation mode of the target connected device may be further selected based on the operation mode configuration label associated with the connected device selection label, so as to complete configuration of the target connected device.

In some cases, after the target operation mode of the target connected device is selected based on the operation mode configuration label associated with the connected device selection label, specific configuration information of the target operation mode is further generated. A display sequence and content of the specific configuration information are generated in advance. The specific configuration information may be used to control a corresponding target connected device on the basis of setting the target operation mode.

In a specific implementation, the connected devices each have an independent operation mode. For example, the battery has a self-generation and self-consumption operation mode, the charging pile has a green power operation mode, and the heat pump has a timing operation mode. In this embodiment, the user configures an operation mode for the selected target connected device according to an actual requirement.

Step 102: Generate an energy configuration list based on the connected device selection label and the operation mode configuration label.

A configuration list is generated based on a label dynamically selected by the user. The user may cancel the energy configuration list and perform reselection. The system labels an option again dynamically.

Step 103: Configure, based on a configuration list, an operation mode of the target connected device to be the target operation mode.

In some specific implementations, the energy configuration method in this embodiment may further include:
Step 104: Provide corresponding association information based on the energy configuration list, where the association information includes at least one of prompt information, configuration description, a precaution, and a related recommendation of a target operation mode of each target connected device in the energy configuration list.

After the configuration is completed, related prompt information may be given to the user to visually remind the user of an energy configuration status of the current system, so that the user adjusts the configuration in a timely manner based on association information, or pays attention to a running status of the connected device in the target operation mode, and so on, thereby meeting a user requirement in a more user-friendly manner, and enhancing user experience.

The method in this embodiment avoids procedural settings and cumbersome settings caused by switching between a plurality of pages, effectively improves configuration efficiency, better meets user-friendly requirement, enhances user experience, and ensures that the device configuration process and result are safer, simpler, and more efficient.

### Embodiment 2

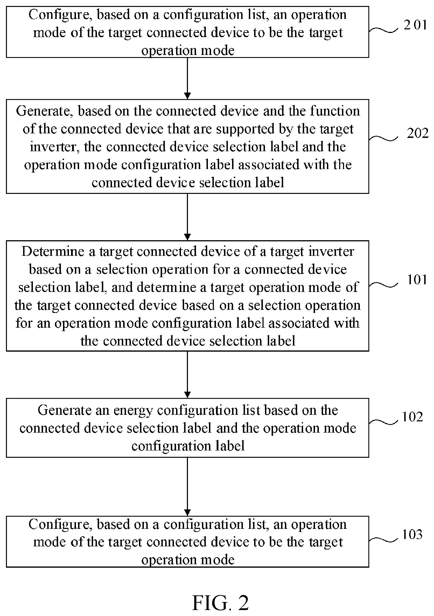

This embodiment provides an energy configuration method. As shown in FIG. 2, on the basis of Embodiment 1, the method in this embodiment further includes:
Step 201: Detect a connected device and a function of the connected device that are supported by a target inverter.

After power-off or power-on for running, hardware and a function that are supported by the target inverter are detected, so as to determine a connected device and a function of the connected device that are adapted to the target inverter. Different inverters may be adapted to different connected devices and different functions of the connected devices.

Step 202: Generate, based on the connected device and the function of the connected device that are supported by the target inverter, the connected device selection label and the operation mode configuration label associated with the connected device selection label.

On the basis of generating the connected device selection label and the operation mode configuration label associated with the connected device selection label in the method in this embodiment, a method step in Embodiment 1 is performed, and energy configuration is quickly performed in a labeled energy configuration manner. The operation mode configuration label associated with the connected device selection label may be generated in advance according to a customer requirement to meet a personalized requirement of the user. To be specific, the user labels an operation mode requirement of each connected device to generate a corresponding label.

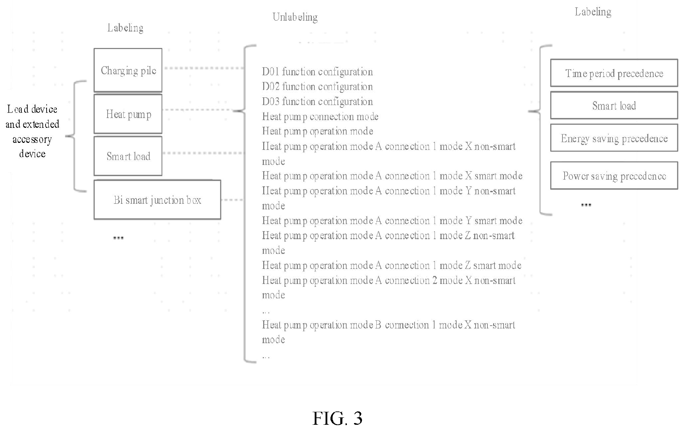

A load device is used as an example, and comparison between unlabeled and labeled configuration manners is shown in FIG. 3. It can be seen that, in the case of unlabeling, a plurality of setting point positions need to be configured when each load device is configured. However, after labeling, a plurality of operation mode configuration labels are formed, and setting can be quickly completed only by selecting a label.

In a specific implementation, the generating, based on the connected device and the function of the connected device that are supported by the target inverter, the connected device selection label and the operation mode configuration label associated with the connected device selection label further includes:
Step 202a: Generate the connected device selection label based on the connected device supported by the target inverter.

Specifically, one corresponding connected device selection label is generated for each connected device for the user to select.

Step 202b: Determine a candidate operation mode of each connected device based on a function of the connected device.

Specifically, each connected device has at least one independent operation mode. Each operation mode has a corresponding configuration requirement. For example, a configuration requirement corresponding to a charging precedence operation mode of the charging pile is a 5 kw power.

Step 202c: Remove a candidate operation mode that is mutually exclusive with configuration information of the target inverter, determine an operation mode configuration label of each connected device based on a candidate operation mode that is obtained after the removal, and associate the operation mode configuration label with a corresponding selection label of the connected device.

In the case of the operation mode configuration label, configuration information of the target inverter needs to be considered, and optimization processing needs to be performed on a candidate operation mode in which a label is generated. For example, the charging pile has a timing mode, and the target inverter also has a timing mode. The timing modes of the charging pile and the target inverter correspond to different timing time periods. In this case, the timing mode is removed from the candidate operation mode.

In this embodiment, multi-dimensional data processing may be performed based on a system support status, and matching is performed between an operation mode of a connected device and an inverter. Further, a label for a user to quickly set is generated through labeling. After the matching, some conflicting label options are removed.

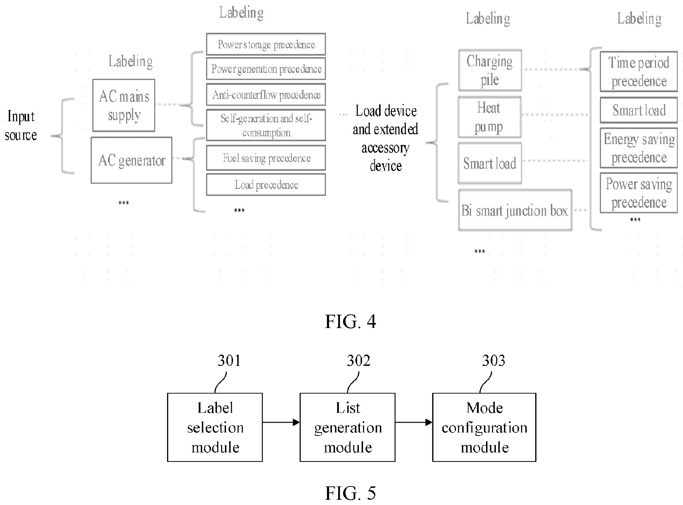

FIG. 4 provides an example of labeling. It can be seen that the AC mains supply has associated operation mode configuration labels such as power storage precedence, power generation precedence, anti-counterflow precedence, and self-generation and self-consumption. The AC generator has operation mode configuration labels such as fuel saving precedence and load precedence. The charging pile, the heat pump, the smart load, the smart junction box, and the like have operation mode configuration labels such as time period precedence, smart load, energy saving precedence, and power saving precedence.

In actual application, an operation mode corresponding to each operation mode configuration label may be associated with a plurality of connected devices. The AC mains supply is used as an example. The operation mode configuration label includes power storage precedence and power generation precedence. Herein, after the connected device selection label of the AC mains supply is selected, two operation mode configuration labels, namely, power storage precedence and power generation precedence are generated. When mounting personnel, operation and maintenance personnel, or the user selects the operation mode configuration label of power storage precedence, these load devices such as the charging pile, the heat pump, and the smart load are automatically adjusted to the green power precedence mode, so as to implement the operation mode of power storage precedence. The load devices supply power only in the case of having excess power. To be specific, when the operation mode of the target connected device is configured to be the target operation mode based on the configuration list, the inverter adjusts, according to a requirement of the target operation mode, the operation mode of the connected device associated with the inverter, so that running of the energy system meets a requirement of the target connected device for the target operation mode.

The operation mode configuration label of each connected device is not independently configured to execute the connected device, but can be set in linkage with another related connected device. Therefore, quick energy configuration can be implemented. In particular, when a function of the existing energy system is complex, an amount of externally exchanged data is large, and a long time is consumed, requirements for operation and maintenance during on-site mounting and quick setting for the device by the user can be met, and a configuration meeting an actual requirement can be effectively recommended through labeled configuration, thereby ensuring that a device configuration process and result are safer, simpler, and more efficient.

In some specific implementations, for the load device, the operation mode configuration label further includes a smart load. For example, based on a sequence of the target connected device - target operation mode, the user configures the target operation mode of the charging pile to be the smart load mode, and configures the target operation mode of the AC mains supply to be power storage precedence, that is, the load device supplies power only in the case of having excess power. Meanwhile, it is collected that the user charges a vehicle by using a charging pile during 19:00-22:00 every day. In this case, at 19:00, the user is reminded whether to adjust an output power of the charging pile during the time period of 19:00-22:00, so as to normally charge the vehicle. To be specific, when the target operation mode of the load device is the smart load mode, and the target operation mode of the input source device does not match a historical running operation of the load device, a prompt indicating whether to smartly adjust the load device based on the historical running operation is sent to the user for the user to select and apply, thereby realizing quick and effective configuration recommendation.

In some cases, the energy configuration method in this embodiment further includes:
Step 203: Detect whether configuration information of the target inverter changes; and when the configuration information of the target inverter changes, perform step 201 of detecting a connected device and a function of the connected device that are supported by the target inverter.

In actual application, the configuration information of the inverter may be changed or upgraded according to a requirement, causing the configuration information to be updated. In this case, it is detected that the configuration information of the target inverter changes. In this case, the connected device and the function of the connected device that are supported by the target inverter need to be detected again, so as to generate a label again for the user to select.

In some cases, the energy configuration method in this embodiment further includes:
Step 204: Detect whether the connected device and the function of the connected device that are supported by the target inverter are increased.
Step 205: If an increased connected device and a function of the connected device have an existing connected device selection label and an operation mode configuration label associated with the existing connected device selection label, generate a prompt indicating whether to continue to use the existing connected device selection label and the operation mode configuration label associated with the existing connected device selection label.

In actual application, there may be a case in which the connected device is powered off and then recovered. If a connected device selection label and an operation mode configuration label associated with the connected device selection label have been generated for the connected device, the user is prompted whether to continue to use the existing connected device selection label and the operation mode configuration label associated with the existing connected device selection label. A user-friendly prompt can simplify a configuration procedure and improve efficiency of energy configuration.

### Embodiment 3

This embodiment provides specific application instances of the foregoing embodiments.

Instance 1: An input source device is selected as a target connected device, and a configuration of the input source device originally involves up to seven setting points of different pages such as a BI-DO configuration, a DO configuration, and a generator setting. After labeling is performed through multi-dimensional data processing in the foregoing embodiments, a connected device selection label and an operation mode configuration label associated with the connected device selection label are obtained. The user only needs to select one or more labels at one single time to complete configuration of the corresponding input source device.

Instance 2: A load device is selected as a target connected device. In an example in which the load device is a heat pump, using a function of the heat pump originally needs to involve up to more than fifty setting points of different pages such as a BI-DO configuration, a DO configuration, and a heat pump setting. After labeling is performed through multi-dimensional data processing in the foregoing embodiments, a connected device selection label and an operation mode configuration label associated with the connected device selection label are obtained. The user only needs to select one or more labels at one single time to complete configuration of the corresponding load device.

Instance 3: A smart junction box(Inverter Smart Panel) is selected as a target connected device, and a point position that needs to be set for the smart junction box originally needs to use a Bi-related setting. After labeling is performed through multi-dimensional data processing in the foregoing embodiments, a connected device selection label and an operation mode configuration label associated with the connected device selection label are obtained. The connected device uniformly determines a user-set label by using an inverter, and automatically maps configuration information corresponding to the selected label to all setting points that need to be synchronized, without requiring the user to perform repeated setting.

Only some application instances of the foregoing method embodiments are described above. In a currently supported complex system, connection of an input source not only involves a generator, but also includes but is not limited to safety regulations of various countries, a metering device such as an electricity meter, a brand and a model of an energy storage battery, whether to parallel-connect devices, and the like. More setting point positions provided for the user lead to poorer user experience. In addition, to avoid a system function conflict or even a potential safety hazard caused by omission of a user setting, a system safety protection policy increases exponentially. This application may be used as an embodiment of simple setting, and may also be used as a system safety protection policy. Using the energy system by the user under a given recommendation label can ensure a quality control effect of the system, thereby further reducing a power consumption risk.

### Embodiment 4

This embodiment provides an energy configuration apparatus. As shown in FIG. 5, the apparatus includes:
a label selection module 301, configured to determine a target operation mode of a target connected device based on a selection operation for an operation mode configuration label associated with the connected device selection label;
a list generation module 302, configured to generate an energy configuration list based on the connected device selection label and the operation mode configuration label; and
a mode configuration module 303, configured to configure, based on the configuration list, an operation mode of the target connected device to be the target operation mode.

The energy configuration apparatus in this embodiment may be applied to an electronic device that has communication, calculation, and data storage capabilities, for example, an electronic device such as an energy device, and is specifically applied to a real-time operating system for an embedded computer in the energy device, and is implemented by a computer program. The energy device is, for example, an inverter. The inverter includes an inverter device providing energy, such as a photovoltaic inverter and a photovoltaic hybrid energy storage inverter.

In a scenario of a complex energy system with multiple input sources and a plurality of connected devices, the apparatus in this embodiment provides a solution for a user to quickly perform energy configuration in a labeled energy configuration manner.

In actual application, there are a plurality of types of devices possibly connected to an inverter in a complex energy system, including at least one of an input source device, a load device, and an extended accessory device. The input source device includes at least one of a mains supply, a photovoltaic power supply, a battery, and a generator, or includes other clean energy. The load device includes at least one of a charging pile, a heat pump, and a smart load. The extended accessory device includes a smart junction box configured to extend a hardware function of the target inverter, for example, a BI (backup interface, backup interface) smart junction box. During use, the smart junction box may be connected to the input source device, the load device, another inverter, another extended accessory device, and the like, to extend the hardware function of the inverter.

Therefore, the target connected device selected by the user for the connected device selection label may include at least one of the input source device, the load device, and the extended accessory device.

On the basis of selecting the target connected device for the connected device selection label, a target operation mode of the target connected device may be further selected based on the operation mode configuration label associated with the connected device selection label, so as to complete configuration of the target connected device.

In some cases, after the target operation mode of the target connected device is selected based on the operation mode configuration label associated with the connected device selection label, specific configuration information of the target operation mode is further generated. A display sequence and content of the specific configuration information are generated in advance. The specific configuration information may be used to control a corresponding target connected device on the basis of setting the target operation mode.

In a specific implementation, the connected devices each have an independent operation mode. For example, the battery has a self-generation and self-consumption operation mode, the charging pile has a green power operation mode, and the heat pump has a timing operation mode. In this embodiment, the user configures an operation mode for the selected target connected device according to an actual requirement. Further, a configuration list is generated based on a label dynamically selected by the user. The user may cancel the energy configuration list and perform reselection. The system labels an option again dynamically.

In some specific implementations, the energy configuration apparatus in this embodiment may further include:
an information prompt module, configured to provide corresponding association information based on the energy configuration list, where the association information includes at least one of prompt information, configuration description, a precaution, and a related recommendation of a target operation mode of each target connected device in the energy configuration list.

After the configuration is completed, related prompt information may be given to the user to visually remind the user of an energy configuration status of the current system, so that the user adjusts the configuration in a timely manner based on association information, or pays attention to a running status of the connected device in the target operation mode, and so on, thereby meeting a user requirement in a more user-friendly manner, and enhancing user experience.

The apparatus in this embodiment avoids procedural settings and cumbersome settings caused by switching between a plurality of pages, effectively improves configuration efficiency, better meets user-friendly requirement, enhances user experience, and ensures that the device configuration process and result are safer, simpler, and more efficient.

It should be noted that all modules used in this embodiment are logical modules. In actual application, one logical unit may be one physical unit, may be a part of one physical unit, or may be implemented by a combination of a plurality of physical units. In addition, to highlight the innovative part of this application, in this embodiment, units that are not closely related to resolving the technical problem proposed in this application are not introduced. However, this does not mean that no other units exist in this embodiment.

### Embodiment 5

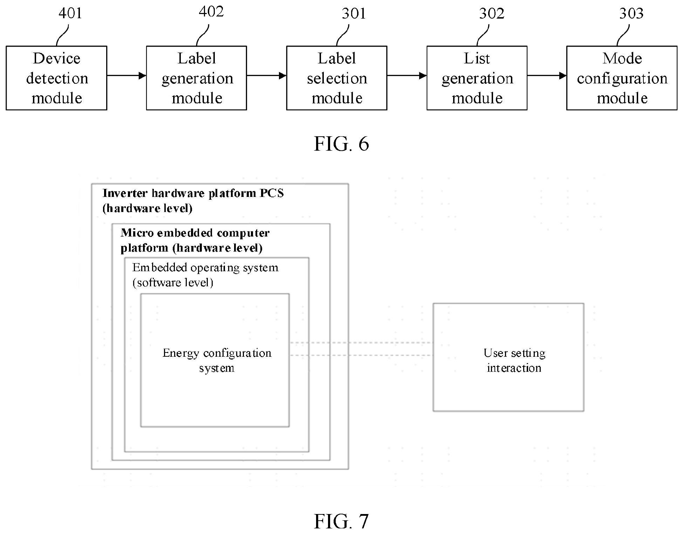

This embodiment provides an energy configuration apparatus. As shown in FIG. 6, on the basis of Embodiment 4, the apparatus in this embodiment further includes:
a device detection module 401, configured to detect a connected device and a function of the connected device that are supported by the target inverter; and
a label generation module 402, configured to generate, based on the connected device and the function of the connected device that are supported by the target inverter, the connected device selection label and the operation mode configuration label associated with the connected device selection label.

After power-off or power-on for running, hardware and a function that are supported by the target inverter are detected, so as to determine a connected device and a function of the connected device that are adapted to the target inverter. Different inverters may be adapted to different connected devices and different functions of the connected devices. On the basis of generating the connected device selection label and the operation mode configuration label associated with the connected device selection label, energy configuration can be quickly performed in a labeled energy configuration manner.

In a specific implementation, the generating, based on the connected device and the function of the connected device that are supported by the target inverter, the connected device selection label and the operation mode configuration label associated with the connected device selection label further includes:
generating the connected device selection label based on the connected device supported by the target inverter; determining a candidate operation mode of each connected device based on a function of the connected device; and removing a candidate operation mode that is mutually exclusive with configuration information of the target inverter, determining an operation mode configuration label of each connected device based on a candidate operation mode that is obtained after the removal, and associating the operation mode configuration label with a corresponding selection label of the connected device.

Specifically, one corresponding connected device selection label is generated for each connected device for the user to select. Each connected device has at least one independent operation mode. Each operation mode has a corresponding configuration requirement. For example, a configuration requirement corresponding to a charging precedence operation mode of the charging pile is a 5 kw power.

In the case of the operation mode configuration label, configuration information of the target inverter needs to be considered, and optimization processing needs to be performed on a candidate operation mode in which a label is generated. For example, the charging pile has a timing mode, and the target inverter also has a timing mode. The timing modes of the charging pile and the target inverter correspond to different timing time periods. In this case, the timing mode is removed from the candidate operation mode.

In this embodiment, multi-dimensional data processing may be performed based on a system support status, and matching is performed between an operation mode of a connected device and an inverter. Further, a label for a user to quickly set is generated through labeling. After the matching, some conflicting label options are removed.

In actual application, an operation mode corresponding to each operation mode configuration label may be associated with a plurality of connected devices. The AC mains supply is used as an example. The operation mode configuration label includes power storage precedence and power generation precedence. Herein, after the connected device selection label of the AC mains supply is selected, two operation mode configuration labels, namely, power storage precedence and power generation precedence are generated. When mounting personnel, operation and maintenance personnel, or the user selects the operation mode configuration label of power storage precedence, these load devices such as the charging pile, the heat pump, and the smart load are automatically adjusted to the green power precedence mode, so as to implement the operation mode of power storage precedence. The load devices supply power only in the case of having excess power. To be specific, when the operation mode of the target connected device is configured to be the target operation mode based on the configuration list, the inverter adjusts, according to a requirement of the target operation mode, the operation mode of the connected device associated with the inverter, so that running of the energy system meets a requirement of the target connected device for the target operation mode.

The operation mode configuration label of each connected device is not independently configured to execute the connected device, but can be set in linkage with another related connected device. Therefore, quick energy configuration can be implemented. In particular, when a function of the existing energy system is complex, an amount of externally exchanged data is large, and a long time is consumed, requirements for operation and maintenance during on-site mounting and quick setting for the device by the user can be met, and a configuration meeting an actual requirement can be effectively recommended through labeled configuration, thereby ensuring that a device configuration process and result are safer, simpler, and more efficient.

In some specific implementations, for the load device, the operation mode configuration label further includes a smart load. For example, based on a sequence of the target connected device - target operation mode, the user configures the target operation mode of the charging pile to be the smart load mode, and configures the target operation mode of the AC mains supply to be power storage precedence, that is, the load device supplies power only in the case of having excess power. Meanwhile, it is collected that the user charges a vehicle by using a charging pile during 19:00-22:00 every day. In this case, at 19:00, the user is reminded whether to adjust an output power of the charging pile during the time period of 19:00-22:00, so as to normally charge the vehicle. To be specific, when the target operation mode of the load device is the smart load mode, and the target operation mode of the input source device does not match a historical running operation of the load device, a prompt indicating whether to smartly adjust the load device based on the historical running operation is sent to the user for the user to select and apply, thereby realizing quick and effective configuration recommendation.

In some cases, the device detection module 401 is further configured to: detect whether configuration information of the target inverter changes; and when the configuration information of the target inverter changes, detect a connected device and a function of the connected device that are supported by the target inverter.

In actual application, the configuration information of the inverter may be changed or upgraded according to a requirement, causing the configuration information to be updated. In this case, it is detected that the configuration information of the target inverter changes. In this case, the connected device and the function of the connected device that are supported by the target inverter need to be detected again, so as to generate a label again for the user to select.

In some cases, the device detection module 401 is further configured to: detect whether the connected device and the function of the connected device that are supported by the target inverter are increased; and if an increased connected device and a function of the connected device have an existing connected device selection label and an operation mode configuration label associated with the existing connected device selection label, generate a prompt indicating whether to continue to use the existing connected device selection label and the operation mode configuration label associated with the existing connected device selection label.

In actual application, there may be a case in which the connected device is powered off and then recovered. If a connected device selection label and an operation mode configuration label associated with the connected device selection label have been generated for the connected device, the user is prompted whether to continue to use the existing connected device selection label and the operation mode configuration label associated with the existing connected device selection label. A user-friendly prompt can simplify a configuration procedure and improve efficiency of energy configuration.

### Embodiment 6

This embodiment further provides an inverter, including:
at least one processor; and
a memory communicatively connected to the at least one processor, where
the memory stores instructions that are executable by the at least one processor, and the instructions are executed by the at least one processor, to enable the at least one processor to perform the energy configuration method in the foregoing embodiments.

The memory is connected to the processor by using a bus. The bus may include any quantity of interconnected buses and bridges. The bus connects various circuits of one or more processors and the memory. The bus may further connect various other circuits such as a peripheral device, a voltage regulator, and a power management circuit together, which are well-known in the art. Therefore, the bus is not further described in this specification. A bus interface provides an interface between the bus and a transceiver. The transceiver may be one element, or may be a plurality of elements, such as a plurality of receivers and transmitters, and provides units configured to communicate with various other apparatuses on a transmission medium. Data processed by the processor is transmitted on a wireless medium by using an antenna. Further, the antenna further receives data and transmits the data to the processor.

The processor is responsible for managing the bus and common processing, and may further provide various functions, including timing, a peripheral interface, voltage regulation, power management, and other control functions. The memory may be configured to store data used by the processor when performing an operation.

FIG. 7 is a schematic diagram of embedding of software and hardware platforms. The method or the apparatus in the foregoing embodiments may be implemented as an energy configuration system by using a computer program, and is applied to an embedded operating system of an inverter. Specifically, the inverter is used as a hardware computer platform, and an embedded operating system is provided on the hardware platform. A user setting is implemented by an external interaction device. A specific interaction device may be a device that can perform an interactive operation, such as a mobile phone, a computer, or a host computer. A related setting interface, a result, and the like are displayed in a form of a mobile phone APP, a touchscreen, a web page, or the like.

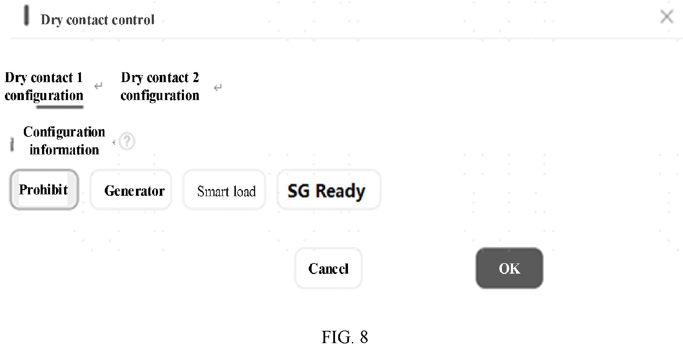

In an example, a labeled configuration interface shown in FIG. 8 may be displayed to mounting personnel, operation and maintenance personnel, or the user by using the interaction device, so as to perform labeled energy configuration, thereby implementing quick energy configuration for a complex system.

### Embodiment 7

This embodiment provides a computer-readable storage medium, storing a computer program, where the computer program is executed by a processor to implement the energy configuration method in the foregoing embodiments.

A person skilled in the art may understand that all or some of the steps of the methods in the foregoing embodiments may be implemented by a program instructing related hardware. The program is stored in a storage medium and includes several instructions for enabling a device (which may be a single-chip microcomputer, a chip, or the like) or a processor (processor) to perform all or some of the steps of the methods in the embodiments of this application. The foregoing storage medium includes various media that can store program code, for example, a USB flash drive, a removable hard disk, a read-only memory (Read-Only Memory, ROM for short), a random access memory (Random Access Memory, RAM for short), a magnetic disk, or an optical disc.

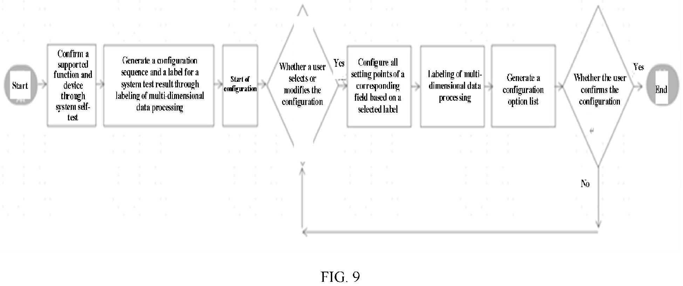

In an example, the energy configuration method in the foregoing embodiments may be implemented by executing a flowchart shown in FIG. 9. The method includes: confirming a supported function and device through system self-test; and generating a configuration sequence and a label for a self-test result after multi-dimensional data processing, that is, a connected device selection label is determined first, and then an operation mode configuration label under the label is confirmed again. The configuration starts. It is detected whether the user selects or modifies the configuration. If yes, all setting points of a corresponding field are configured based on the selected label. After multi-dimensional data processing, a corresponding label is generated, and a configuration option list is further generated. It is detected whether the user confirms the configuration. If yes, the configuration ends. Otherwise, whether the user selects or modifies the configuration continues to be detected.

In this application, cumbersome procedural configurations such as switching between a plurality of pages are not required. A selectable label may be dynamically adjusted by performing matching between a generative labeled user requirement and a user selection, thereby improving efficiency of user configuration, meeting a user requirement in a user-friendly manner, enhancing user experience, improving safety of a device configuration process and result, and making the configuration process simple and efficient. This application is particularly suitable for implementing energy configuration for a complex system.

The foregoing descriptions are merely optional embodiments of this application, and are not intended to limit this application. A person skilled in the art may make various changes and variations to this application. Any modification, equivalent replacement, improvement, and the like made within the spirit and principle of this application shall be included in the scope of the claims of this application.

## Claims

1. An energy configuration method, comprising:
determining a target connected device of a target inverter based on a selection operation for a connected device selection label, and determining a target operation mode of the target connected device based on a selection operation for an operation mode configuration label associated with the connected device selection label, wherein the target connected device comprises at least one of an input source device, a load device, and an extended accessory device;
generating an energy configuration list based on the connected device selection label and the operation mode configuration label; and
configuring, based on the configuration list, an operation mode of the target connected device to be the target operation mode.

2. The energy configuration method according to claim 1, further comprising:
providing corresponding association information based on the energy configuration list, wherein the association information comprises at least one of prompt information, configuration description, a precaution, and a related recommendation of a target operation mode of each target connected device in the energy configuration list.

3. The energy configuration method according to claim 1, further comprising:
detecting a connected device and a function of the connected device that are supported by the target inverter; and
generating, based on the connected device and the function of the connected device that are supported by the target inverter, the connected device selection label and the operation mode configuration label associated with the connected device selection label.

4. The energy configuration method according to claim 3, wherein the generating, based on the connected device and the function of the connected device that are supported by the target inverter, the connected device selection label and the operation mode configuration label associated with the connected device selection label comprises:
generating the connected device selection label based on the connected device supported by the target inverter;
determining a candidate operation mode of each connected device based on a function of the connected device; and
removing a candidate operation mode that is mutually exclusive with configuration information of the target inverter, determining an operation mode configuration label of each connected device based on a candidate operation mode that is obtained after the removal, and associating the operation mode configuration label with a corresponding selection label of the connected device.

5. The energy configuration method according to claim 3, further comprising:
detecting whether configuration information of the target inverter changes; and
when the configuration information of the target inverter changes, performing a step of detecting a connected device and a function of the connected device that are supported by the target inverter.

6. The energy configuration method according to claim 3, further comprising:
detecting whether the connected device and the function of the connected device that are supported by the target inverter are increased; and
if an increased connected device and a function of the connected device have an existing connected device selection label and an operation mode configuration label associated with the existing connected device selection label, generating a prompt indicating whether to continue to use the existing connected device selection label and the operation mode configuration label associated with the existing connected device selection label.

7. The energy configuration method according to claim 1, wherein the input source device comprises at least one of a mains supply, a photovoltaic power supply, a battery, and a generator; the load device comprises at least one of a charging pile, a heat pump, and a smart load; and the extended accessory device comprises a smart junction box configured to extend a hardware function of the target inverter.

8. An energy configuration apparatus, comprising:
a label selection module, configured to determine a target operation mode of a target connected device based on a selection operation for an operation mode configuration label associated with the connected device selection label;
a list generation module, configured to generate an energy configuration list based on the connected device selection label and the operation mode configuration label; and
a mode configuration module, configured to configure, based on the configuration list, an operation mode of the target connected device to be the target operation mode.

9. An inverter, comprising:
at least one processor; and
a memory communicatively connected to the at least one processor, wherein
the memory stores instructions that are executable by the at least one processor, and the instructions are executed by the at least one processor, to enable the at least one processor to perform the energy configuration method according to any one of claims 1 to 7.

10. A computer-readable storage medium, storing a computer program, wherein the computer program is executed by a processor to implement the energy configuration method according to any one of claims 1 to 7.
